# EUROPÄISCHE PATENTANMELDUNG

(11) **EP 4 372 868 A1**
(43) Veröffentlichungstag der Anmeldung: **22.05.2024**
(21) Anmeldenummer: 22208185.3
(22) Anmeldetag: 17.11.2022
(51) Int. Cl.: H01M 10/613, H01M 10/617, H01M 10/6235, H01M 10/647, H01M 10/653, H01M 10/6551, H01M 50/103, H01M 50/105, H01M 50/209, H01M 50/211, H01M 50/22, H01M 50/247, H01M 10/052

(54) **AKKUPACK ALS ENERGIEQUELLE FÜR ELEKTRISCHE VERBRAUCHER**

(71) Anmelder: Andreas Stihl AG & Co. KG, 71336 Waiblingen (DE)
(72) Erfinder: Pöhler, Maria, 71336 Waiblingen (DE); Wolf, Andreas, 71397 Leutenbach (DE); Gläser, Jürgen, 76848 Lug (DE); Henzler, Andreas, 72669 Unterensingen (DE); Härtel, Alexander, 71640 Ludwigsburg (DE)
(74) Vertreter: Karzel, Philipp

(57) **Zusammenfassung**

Die Erfindung betrifft einen Akkupack als Energiequelle für einen elektrischen Verbraucher, wobei der Akkupack (1) ein geschlossenes Gehäuse (2) mit einem inneren Aufnahmeraum (3) für mehrere Einzelzellen (4) aufweist. Das Gehäuse (2) des Akkupacks (1) hat eine allgemeine Grundform mit ersten und zweiten Seitenwänden (5, 6), wobei die Seitenwände (5, 6) des Gehäuses (2) aus einem wärmeleitenden Material bestehen, und die Innenflächen (7, 8) der Seitenwände (5, 6) den Aufnahmeraum (3) begrenzen. Um einen thermisch ausbalancierten Akkupack zu schaffen, ist in dem Aufnahmeraum (3) ein Zellverbund (19) aus mehreren Einzelzellen (4) aufgenommen ist, wobei eine Einzelzelle (4) Flachseiten (10) und Randseiten (11) aufweist. Die Einzelzellen (4) liegen mit ihren Flachseiten (10) geschichtet nebeneinander, derart, dass außen liegende, äußere Einzelzellen (4a) und innen liegende, innere Einzelzellen (4b) gegeben sind. D die äußeren Einzelzellen (4a) liegen mit ihren Flachseiten (10) flächig und wärmeübertragend an den Innenflächen (7) der ersten Seitenwände (5) des Gehäuses (2) anliegen, und die inneren Einzelzellen (4b) sind wärmeübertragend an die äußeren Einzelzellen (4a) des Zellverbundes (19) angebunden.

## Beschreibung

Die Erfindung betrifft einen Akkupack als Energiequelle für einen elektrischen Verbraucher. Der Akkupack weist ein geschlossenes Gehäuse auf, das eine allgemeine Grundform mit ersten und zweiten Seitenwänden aufweist. Das Gehäuse kann ergänzend eine erste Stirnseite und eine zweite Stirnseite aufweisen. Zumindest die Seitenwände des Gehäuses bestehen aus einem wärmeleitenden Material. Die Innenflächen der Seitenwände begrenzen einen inneren Aufnahmeraum des Gehäuses, in dem mehrere wieder aufladbaren Einzelzellen angeordnet sind. Auf dem dem Aufnahmeraum abgewandten Außenflächen der Seitenwände sind Kühlrippen des Gehäuses ausgebildet.

Um einen leistungsfähigen Akkupack geringer Baugröße zur Verfügung zu stellen, sind im Aufnahmeraum des Gehäuses mehrere Einzelzellen dicht an dicht angeordnet. Wird der Akkupack durch einen äußeren Verbraucher elektrisch belastet, steigt die Temperatur der Einzelzellen an. Dabei sind die von außen liegenden, äußeren Einzelzellen umgebenden, innenliegenden inneren Einzelzellen thermisch stärker belastet als die äußeren Einzelzellen. Die Innentemperatur des Akkupack steigt von außen nach innen an. Eine zu starke Erhöhung der Innentemperatur eines Akkupack kann zu einer vorzeitigen Sicherheitsabschaltung führen, obwohl noch ausreichend Akkukapazität zum längeren Betrieb eines elektrischen Verbrauchers zur Verfügung steht.

Der Erfindung liegt die Aufgabe zugrunde einen Akkupack als Energiequelle für einen elektrischen Verbraucher derart auszubilden, dass auch bei starker elektrischer Belastung die Temperatur innenliegender Einzelzellen des Akkupacks nicht wesentlich stärker ansteigt als die Temperatur der außen liegenden Einzelzellen. Es soll ein bei Belastung thermisch ausbalancierter Akkupack geschaffen werden.

Die Aufgabe wird nach den Merkmalen des Anspruchs 1 gelöst. In dem Aufnahmeraum ist ein aus mehreren Einzelzellen bestehender Zellverbund aufgenommen, wobei eine Einzelzelle Flachseiten und Randseiten aufweist. Insbesondere sind die Einzelzellen als Pouch Zellen (Coffee-Bag-Zelle) ausgebildet. Die Flachseite einer Einzelzelle entspricht vorteilhaft der Innenfläche einer Seitenwand des Gehäuses. Der im Aufnahmeraum angeordnete Zellverbund besteht aus mehreren mit ihren Flachseiten geschichtet nebeneinander liegenden Einzelzellen. Der Zellverbund weist außen liegende, äußere Einzelzellen und innen liegende, innere Einzelzellen auf. Die äußeren Einzelzellen des Zellverbundes liegen mit ihren Flachseiten Wärme übertragend an den Innenflächen der ersten Seitenwände des Gehäuses an. Die inneren Einzelzellen liegen Wärme übertragend an den zugewandten Flachseiten der äußeren Einzelzellen des Zellverbundes an.

Die in den äußeren Einzelzellen entstehende Wärme wird unmittelbar an die Seitenwand des Gehäuses abgegeben, sodass die äußere Einzelzelle im Zellverbund eine Art Wärmesenke bildet. Die Abwärme einer an der äußeren Einzelzelle flächig anliegenden inneren Einzelzelle wird über die eine Wärmesenke bildende äußere Einzelzelle an das Gehäuse abgegeben. Eine thermische Überlastung innenliegender Einzelzellen kann so vermieden werden. Der Zellverbund ist thermisch ausbalanciert.

Um die Wärmeabfuhr innenliegender Einzelzellen weiter zu verbessern ist vorgesehen, dass die Einzelzellen des Zellverbundes mit ihren Randseiten Wärme übertragend an den Innenflächen der zweiten Seitenwände des Gehäuses anliegen. Auf diese Weise haben die innenliegenden Einzelzellen ergänzend zu dem Wärme ableitenden Wärmepfad über die äußeren Einzelzellen einen direkten Kontakt mit der Seitenwand des Gehäuses, die aus einem Wärme ableitenden Material besteht.

Wieder aufladbare Einzelzellen, insbesondere Pouch Zellen, unterliegen in Abhängigkeit ihres Ladezustandes einer Volumenänderung, die bei einer engen Füllung des Aufnahmeraums mit Einzelzellen zu berücksichtigen ist. In Weiterbildung der Erfindung ist daher vorgesehen, zwischen benachbarten Einzelzellen des Zellverbundes ein Volumenausgleichselement anzuordnen. Das Volumenausgleichselement umfasst insbesondere wärmeleitendes Material. Das Volumenausgleichselement hat eine Höhe und eine Breite, die der Abmessung einer Einzelzelle, insbesondere einer Pouch Zelle entspricht. Die Anordnung des Volumenausgleichselements erfolgt im Zellverbund nach zwei, drei, vier oder mehr Einzelzellen. Es kann ausreichend sein, in einem Zellverbund von zum Beispiel zehn Einzelzellen ein oder zwei Volumenausgleichselemente anzuordnen.

Für eine gute Wärmeabfuhr aus dem Aufnahmeraum über die Wärme ableitenden ersten und zweiten Seitenwände des Gehäuses liegen mehrere Einzelzellen des Zellverbundes flächig aneinander an. Insbesondere liegen die Einzelzellen unmittelbar flächig aneinander an.

Die Packungsdichte des Zellverbundes im Aufnahmeraum ist so vorgesehen, dass der Aufnahmeraum vorzugsweise zu 95% bis 98% gefüllt ist. Vorteilhaft ist vorgesehen, den Aufnahmeraum vollständig zu füllen, insbesondere lückenlos mit Einzelzellen und insbesondere zumindest einem ggf. notwendigen Volumenausgleichselement füllen. Der Zellverbund ist so angeordnet, dass sowohl über die ersten Seitenwände als auch über die zweiten Seitenwände eine Wärmeabfuhr auf das Wärme ableitenden Gehäuse des Akkupack erzielt ist.

Zur Vermeidung eines Wärmehotspots im Zentrum des Zellverbundes kann es vorteilhaft sein, die zweiten Seitenwände des Gehäuses über zumindest eine innere, wärmeleitende Trennwand miteinander zu verbinden. Die Trennwand erstreckt sich über die Höhe und die Breite einer Flachseite einer Einzelzelle. Durch die Trennwand ist der Aufnahmeraum in zumindest zwei Teilräume aufgeteilt. In jedem Teilraum ist ein Teilverbund aus Einzelzellen aufgenommen, wobei der Zellverbund des Akkupacks aus zumindest zwei Teilverbunde zusammengesetzt ist.

In Weiterbildung der Erfindung ist auf der Innenfläche einer Seitenwand eine als Vertiefung in der Seitenwand ausgebildete Kabelrinne vorgesehen. Die Kabelrinne liegt außerhalb des von den Innenflächen der Seitenwände des Gehäuses begrenzten Aufnahmeraums. Die innerhalb eines Akkupack notwendigen elektrischen Leitungen zwischen den Akkukontakten auf der einen Stirnseite des Gehäuses und Bedien- und/oder Anzeigeelementen auf der anderen Stirnseite des Gehäuses können in der Kabelrinne verlegt werden, ohne den engen Kontakt bzw. die Anlage der Flachseite einer äußeren Einzelzelle an der Innenfläche der Seitenwand des Gehäuses zu stören. Zweckmäßig verläuft die Kabelrinne von der ersten Stirnseite des Gehäuses bis zur zweiten Stirnseite des Gehäuses. Die Kabelrinne verläuft insbesondere in Hochrichtung des Gehäuses.

Die Kabelrinne ist so ausgeführt, dass sie zum Aufnahmeraum hin geschlossen ist. Dies kann dadurch erreicht werden, dass die Kabelrinne mit einem Füllmaterial verfüllt ist, insbesondere einem wärmeleitenden Füllmaterial verfüllt ist. Der Füllspiegel des Füllmaterials liegt parallel zur Seitenwand bevorzugt in einer Ebene mit der Innenfläche der Seitenwand. Alternativ kann auch vorgesehen sein, die Kabelrinne mit einem Kanaldeckel zu verschließen, wobei der Kanaldeckel insbesondere aus einem wärmeleitenden Material besteht. Der Kanaldeckel ist derart angeordnet, dass er in einer Ebene mit der Innenfläche der Seitenwand des Gehäuses liegt.

Für eine gute Wärmeabfuhr ist vorgesehen, auf der Außenfläche einer Seitenwand des Gehäuses Längsrippen vorzusehen. Die Längsrippen verlaufen insbesondere in Hochrichtung von der einen Stirnseite des Gehäuses zur anderen Stirnseite des Gehäuses. Die Längsrippen vergrößern die Wärme abgebende Außenfläche des Gehäuses. Die Kabelrinne ist mit einer senkrecht zur Seitenwand gemessenen Tiefe ausgebildet, die gleich oder geringer ist wie eine senkrecht zur Seitenwand gemessene Rippenhöhe einer Längsrippe.

Das Gehäuse des Akkupack ist derart ausgebildet, dass eine erste Stirnseite des Gehäuses als Anschlussseite des Akkupacks vorgesehen ist. Die erste Stirnseite weist Akkukontakte zum Laden oder Entladen des Zellverbundes auf. Nahe der zweiten Stirnseite des Gehäuses ist eine elektronische Überwachungseinrichtung für den Zellverbund angeordnet, wobei von den Akkukontakten zur Überwachungseinrichtung führende elektrische Leitungen in der Kabelrinne geführt sind.

Das Gehäuse des Akkupacks besteht im Wesentlichen aus Gehäusebauteilen für die Seitenwände und jeweils einem Stirnbauteil für je eine Stirnseite. Die Gehäusebauteile für die Seitenwände sind insbesondere Gleichteile, wobei ein Gleichteil eine erste Seitenwand und eine zweite Seitenwand des Akkupacks umfasst. Der Grundkörper des Akkupack besteht aus zwei Gehäusebauteilen. Die Stirnbauteile übergreifen insbesondere die Ränder der Seitenwände bzw. der Gehäusebauteile. Insbesondere greifen die Ränder der Seitenwände bzw. der Gehäusebauteilen in einer umlaufenden Dichtungsnut eines Stirnbauteils ein.

In Weiterbildung der Erfindung ist vorgesehen, dass auf der Außenfläche einer Seitenwand des Gehäuses in Hochrichtung verlaufende Längsrippen vorgesehen sind. Zwei benachbarte Längsrippen auf einer Seitenwand des Gehäuses begrenzen eine Längsrinne, die in ein Stirnbauteil einer Stirnseite mündet. Die Ausbildung ist zweckmäßig so vorgesehen, dass die Mündung einer ersten in ein Stirnbauteil mündenden Längsrinne eine Angussöffnung für ein Vergussmaterial bildet und die Mündung einer zweiten in dasselbe Stirnbauteil mündenden Längsrinne eine Entlüftungsöffnung bildet. Nach dem Zusammenfügen des Gehäuses und dem Aufzusetzen eines Stirnbauteil kann so über eine äußere Längsrinne Vergussmaterial in den Innenraum eingespritzt werden, um zum Beispiel die nahe eines Stirnbauteil vorgesehene Überwachungseinrichtung vollständig zu vergießen. Die beim Verguss verdrängte Luft kann über die zweite Längsrinne entweichen.

Weitere Merkmale der Erfindung ergeben sich aus den weiteren Ansprüchen sowie der nachfolgenden Beschreibung und aus den Darstellungen des Ausführungsbeispiels in den Zeichnungen. Die offenbarten Merkmale können beliebig kombiniert werden um die Erfindung zu beschreiben. Die Zeichnungen zeigen wie folgt:
- Fig. 1: eine perspektivische Gesamtansicht eines Akkupacks,
- Fig. 2: eine Seitenansicht des Akkupacks nach Fig. 1,
- Fig. 3: ein Gehäusebauteil des Gehäuses des Akkupacks bestehend aus einem Winkelbauteil aus einer ersten Seitenwand und einer zweiten Seitenwand,

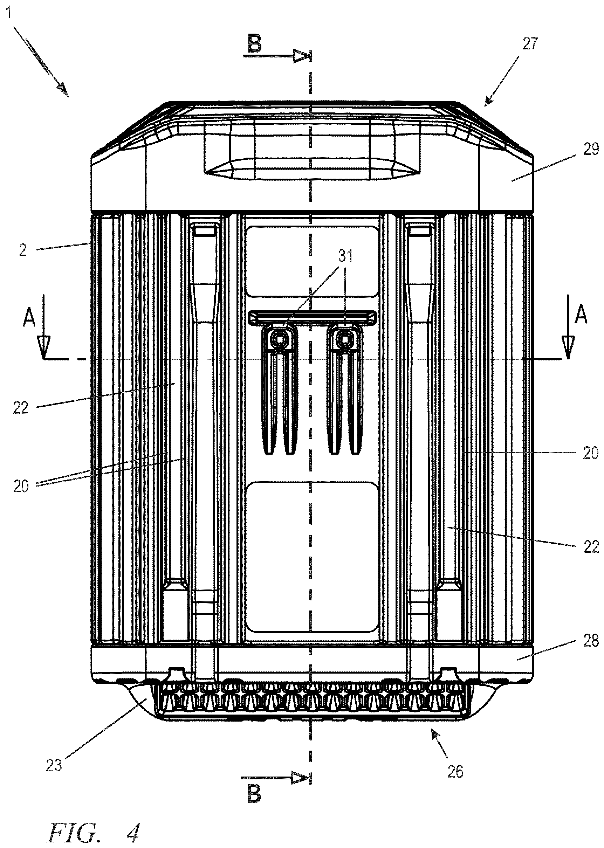

- Fig. 4: eine weitere Seitenansicht des Akkupacks nach Fig. 1,
- Fig. 5: einen Schnitt durch den Akkupack längs der Linie A - A in Fig. 4,
- Fig. 6: einen Schnitt durch den Akkupack längs der Linie B - B in Fig. 4,
- Fig. 7: eine perspektivische Darstellung einer Einzelzelle des Akkupacks in einer Ausführung als Pouch Zelle.

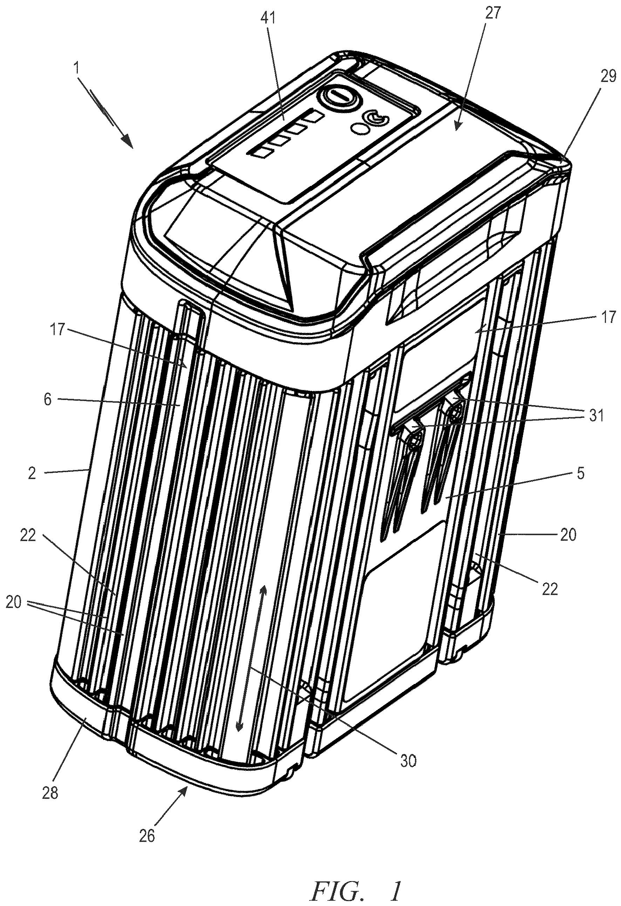

Der in Fig. 1 dargestellte Akkupack 1 dient als Energiequelle für einen elektrischen Verbraucher wie ein handgeführtes Arbeitsgerät, insbesondere ein im Betrieb getragenes, handgeführtes Arbeitsgerät. Ein derartiges Arbeitsgerät kann eine Motorsäge, ein Freischneider, ein Blasgerät, eine Heckenschere oder dergleichen Arbeitsgerät sein.

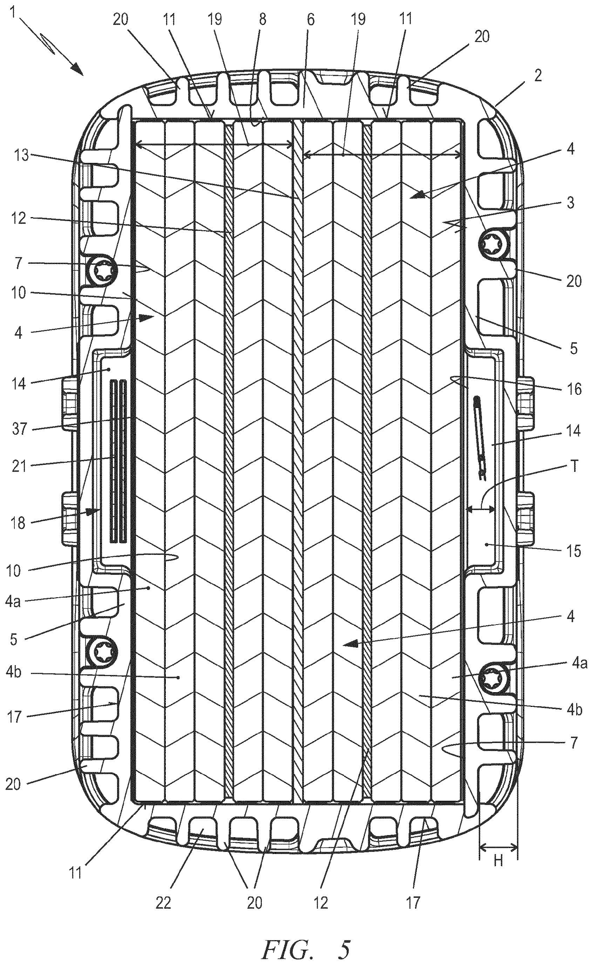

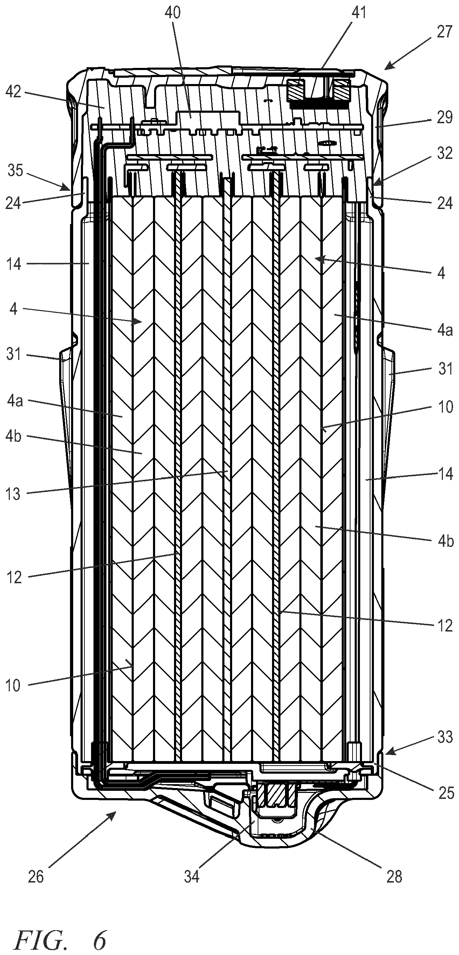

Der Akkupack 1 weist ein geschlossenes Gehäuse 2 mit einem inneren Aufnahmeraum 3 (Fig. 5) auf, in dem mehrere Einzelzellen 4 angeordnet sind, wie die Fig. 5 und 6 zeigen.

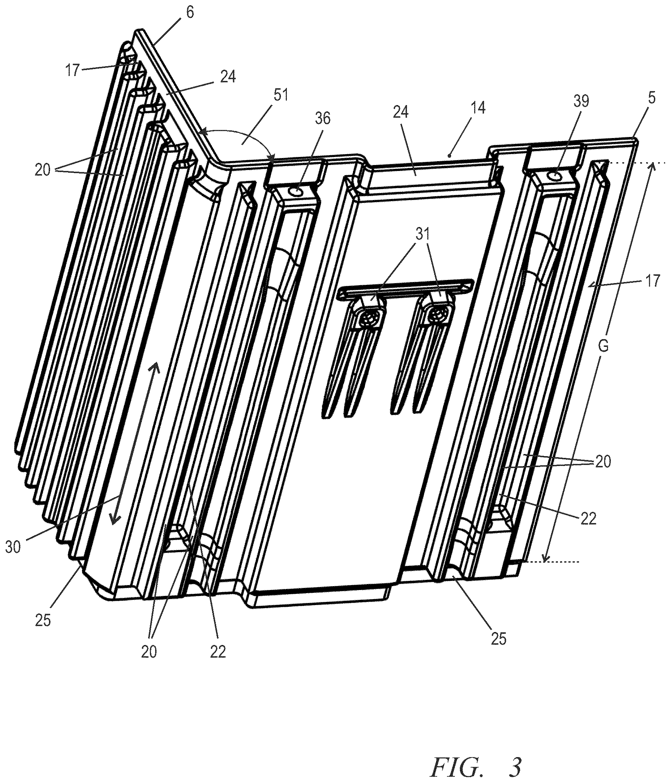

Das Gehäuse 2 hat eine allgemeine Grundform mit ersten Seitenwänden 5 und zweiten Seitenwänden 6. Wie insbesondere Fig. 3 zeigt, sind eine erste Seitenwand 5 und eine zweite Seitenwand 6 an einem gemeinsamen Gehäusebauteil 50 des Gehäuses 2 ausgebildet. Die Seitenwände 5 und 6 liegen mit einem rechten Winkel 49 zueinander. Dass Gehäusebauteil 50 bildet somit einen Winkelbauteil. Die Seitenwand 5 bildet eine Breitseite des Gehäuses 2; die Seitenwand 6 bildet eine Schmalseite des Gehäuses 2. Das Gehäuse 2 hat eine im Wesentlichen kubische Grundform.

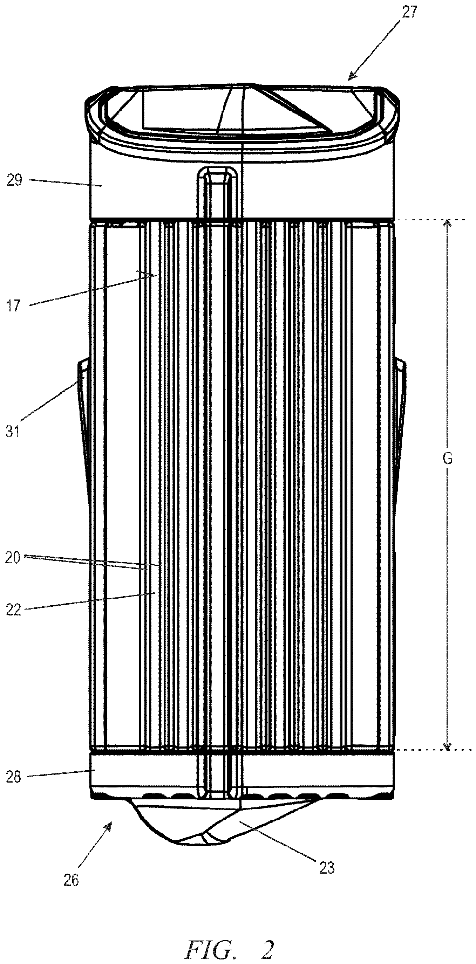

Das Gehäuse 2 des Akkupacks 1 weist ferner eine erste Stirnseite 26 und eine zweite Stirnseite 27 auf. Die erste Stirnseite 26 wird von einem ersten Stirnbauteil 29 gebildet. Die zweite Stirnseite 27 wird von einem zweiten Stirnbauteil 29 gebildet. Das Gehäuse 2 ist aus den als Gleichteile ausgebildeten Gehäusebauteilen 50 und den Stirnbauteilen 28 und 29 zusammengesetzt. Die Stirnbauteile 28 und 29 übergreifen die Seitenwände 5 und 6, wie insbesondere in den Fig. 1 und 2 dargestellt. Insbesondere die Ränder 24 und 25 der Seitenwände 5 und 6 (vgl. Fig. 3) werden von den Stirnbauteilen 28 und 29 übergriffen. Zur Erzielung eines dichten Gehäuses ist vorgesehen, dass die Ränder 24 und 25 in eine umlaufende Dichtungsnut 32 bzw. 33 (Fig. 6) eines Stirnbauteils 28 bzw. 29 dichtend eingreifen.

Auf der Außenfläche 17 der ersten Seitenwand 5 und/oder auf der Außenfläche 17 der zweiten Seitenwand 6 des Gehäuses 2 sind Längsrippen 20 ausgebildet. Die Längsrippen 20 verlaufen insbesondere in Hochrichtung 30 des Gehäuses 2. Die Längsrippen 20 erstrecken sich im Wesentlichen über die gesamte Höhe G der Seitenwand, wobei jede Seitenwand 5, 6 mit einem oberen Rand 24 und einem unteren Rand 26 ausgebildet ist. Auf der die Breitseite des Akkupacks 1 bildenden Seitenwand 5 sind Rastelemente 31 vorgesehen. Die Rastelemente 31 dienen der Verrastung des Akkupacks 1 in einem Aufnahmeschacht eines Arbeitsgerätes.

Wie insbesondere Fig. 3 zeigt, begrenzen auf der Außenfläche 17 einer Seitenwand 5, 6 in Hochrichtung 30 verlaufende, unmittelbar nebeneinander liegende Längsrippen 20 eine Längsrinne 22. Eine zwischen zwei benachbarten Längsrippen 20 ausgebildete Längsrinne 22 mündet in ein Stirnbauteil 28 bzw. 29 einer Stirnseite 26 bzw. 27 des Akkupacks 1. In besonderer Ausgestaltung ist vorgesehen, dass die Mündung 36 einer ersten Längsrinne 22 eine Angussöffnung für ein Vergussmaterial bildet und die Mündung 39 einer zweiten Längsrinne 22 eine Entlüftungsöffnung bilden. Dadurch wird die Möglichkeit geschaffen, nach dem Zusammenfügen des Gehäuses 2 aus den Gehäusebauteilen 50 und den Stirnbauteilen 28 und 29 bestehende Hohlräume in den Stirnbauteilen 28 und 29 mit Isoliermaterial zu vergießen. So kann zum Beispiel eine im zweiten Stirnbauteil 29 angeordnete elektronische Überwachungseinrichtung 40 vollständig vergossen werden. Das Vergussmaterial kann darüber hinaus in die Dichtungsnut 32 bzw. 33 eindringen und eine mechanisch feste Verbindung zwischen dem Stirnbauteil 28 bzw. 29 und den Gehäusebauteilen 50 herstellen.

Wie insbesondere aus Fig. 6 ersichtlich, ist die erste Stirnseite 26 des Akkupacks 1 schon wieder als Anschlussseite des Akkupacks ausgebildet. In der Anschlussseite des Akkupacks 1 sind elektrische Akkukontakte 34 zum Laden oder Entladen eines im Akkupack 1 aufgenommenen Zellverbundes vorgesehen.

In der zweiten Stirnseite 27 des Akkupacks 1 ist eine Anzeigevorrichtung 41 vorgesehen, über die zum Beispiel der Ladezustand des Akkupacks 1 angezeigt werden kann. In der Anzeigevorrichtung 41 können darüber hinaus auch Bedienelemente integriert sein.

Wie Fig. 6 zeigt, dient das zweite Stirnbauteil 29 einerseits zur Aufnahme der Anzeigevorrichtung 41 und andererseits zur Aufnahme einer Überwachungseinrichtung 40, die der elektrischen Überwachung des Zellverbundes, der Temperatur innerhalb des Zellverbundes sowie der Lade- und Entladeström dient. Wie Fig. 6 auch zeigt, sind die im Stirnbauteil 29 liegenden Zellkontakte 35 der Einzelzellen des Zellverbundes mit dem Vergussmaterial 42 umhüllt, wodurch eine mechanische Stabilisierung der Zellkontakte 35 erzielt ist.

Wie aus dem Schnitt durch den Akkupack 1 längs der Linie A - A in der Darstellung nach Fig. 5 hervorgeht, sind in dem Aufnahmeraum 3 des Gehäuses 2 mehrere Einzelzellen 4 aufgenommen. Eine Anzahl von Einzelzellen 4 bildet einen Zellverbund 19. In Fig. 5 sind zwei Zellverbunde 19 dargestellt, die gemeinsam den Zellverbund des Akkupacks 1 bilden.

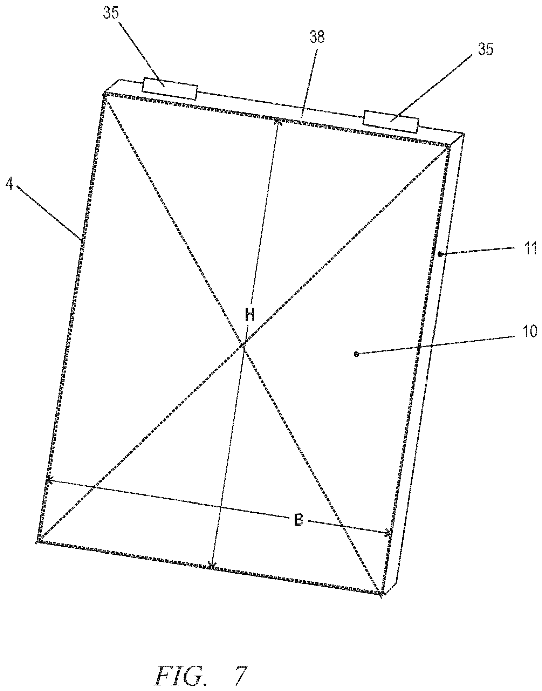

Im Ausführungsbeispiel ist als Einzelzelle 4 eine Pouch Zelle (Coffee-Bag-Zelle) dargestellt, wie sie schematisch in Fig. 7 wiedergegeben ist. Die Einzelzelle 4 weist Flachseiten 10 und Randseiten 11 auf. Eine Flachseite 10 hat eine Höhe H und eine Breite B. In einem oberen Rand 38
sind die elektrischen Zellkontakte 35 der Einzelzelle 4 vorgesehen. Eine Einzelzelle 4 hat eine Zellspannung 3,6 bis 4,2 V.

In dem durch die Innenflächen 7 und 8 der Seitenwände 5 und 6 begrenzten Aufnahmeraum 3 des Gehäuses 2 sind insgesamt zehn Einzelzellen 4 angeordnet. Der Akkupack 1 hat somit eine Nennspannung von 36 V.

Ein Zellverbund 19 ist aus mehreren mit ihren Flachseiten 10 geschichtet nebeneinander liegenden Einzelzellen 4 gebildet. Ein Zellverbund 19 weist dabei außenliegende, äußere Einzelzellen 4a und innenliegende, innere Einzelzellen 4b auf. Wie Fig. 5 zeigt, liegen die äußeren Einzelzellen 4a des Zellverbundes 19 mit ihren Flachseiten 10 flächig und Wärme übertragend an den Innenflächen 7 der ersten Seitenwände 5 des Gehäuses 2 an. Eine innere Einzelzelle 4b liegt mit ihrer Flachseite 10 flächig an der hierzugewandten Flachseite der äußeren Einzelzelle 4a an. Die äußere Einzelzelle 4a gibt ihre Wärme unmittelbar an die Seitenwand 5 des Gehäuses 2 ab, sodass die äußere Einzelzelle eine Art Wärmesenke bildet. Die von der inneren Einzelzelle 4b über den flächigen Kontakt mit der äußeren Einzelzelle 4a weitergegebene Wärme wird über die äußere Einzelzelle 4a auf die Seitenwand des Gehäuses übertragen.

Vorteilhaft ist vorgesehen, dass die Einzelzellen 4 des Zellverbunds 19 mit ihren Randseiten 11 Wärme übertragend an den Innenflächen 8 der zweiten Seitenwände 6 des Gehäuses 2 anliegen. Dies ist insbesondere für die inneren Einzelzellen 4b von Vorteil. Eine innere Einzelzelle 4b gibt über den flächigen Kontakt ihrer Randseiten 11 mit beiden Schmalseiten des Gehäuses 2, also mit beiden zweiten Seitenwänden 6 des Gehäuses 2, entstehende Wärme unmittelbar an das wärmeleitende Gehäuse 2 des Akkupacks 1 ab. Auch innere Einzelzellen 4b können so auftretende Prozesswärme sicher abgeben, sodass eine zu hohe Temperatur im Inneren des Zellverbundes 19 sicher vermieden ist.

Da auch die äußeren Einzelzellen 4a mit ihren Randseiten 11 an den zweiten Seitenwänden des Gehäuses 2 anliegen, ist deren Wirkung als Wärmesenke gewährleistet.

Der Zellverbund 19 füllt den Aufnahmeraum 3 bis zu 95 % vollständig aus, insbesondere wird der Aufnahmeraum vollständig ausgefüllt. Dadurch ist unabhängig vom Ladezustand oder Entladezustand des Akkupacks 1 eine gute Wärme übertragender Anlage sowohl der Flachseiten 10 einer Einzelzelle 4 als auch der Randseiten 11 einer Einzelzelle 4 an dem Wärme ableitenden Material der Seitenwände 5 und 6 erzielt. Es wird ein thermisch ausbalancierte Akkupack 1 erreicht.

Zum Volumenausgleich eines insbesondere aus Pouch Zellen gebildeten Zellverbunds 19 kann vorteilhaft ein Volumenausgleichselement 12 vorgesehen sein. Um den Wärmetransport innerhalb des Zellverbundes zu verbessern ist vorgesehen, dass das Volumenausgleichselement 12 ein wärmeleitendes Material umfasst, insbesondere aus einem wärmeleitenden Material besteht.

Es kann vorteilhaft sein, den Aufnahmeraum 3 durch eine innere Trennwand 13 aufzuteilen. Wie Fig. 5 und 6 zeigt, ist die zumindest eine innere, wärmeleitende Trennwand 13 derart angeordnet, dass sie die zweiten Seitenwände 6 des Gehäuses 2 miteinander verbindet. Die zweiten Seitenwände 6 sind die Schmalseiten des Gehäuses 2.durch die wärmeleitende, innere Trennwand 13 wird der Aufnahmeraum 3 in 2 Teil aufgeteilt. In jedem Teilraum ist ein Zellverbund 19 aufgenommen.

Die innere Trennwand 13 kann als Bauteil in den Aufnahmeraum 3 eingeschoben sein. Vorteilhaft ist die Trennwand 13 Teil des Gehäuses 2, insbesondere einteilig mit dem Gehäuse 2 vorgesehen.

Wie die Figuren Fig. 5 und 6 zeigen, ist auf der Innenfläche 7 einer Seitenwand 5 eine als Vertiefung 14 ausgebildete Kabelrinne 18 vorgesehen. Die Vertiefung 14 bzw. die dadurch gebildete Kabelrinne 18 liegt außerhalb des von den Innenflächen 7 und 8 der Seitenwände 5 und 6 des Gehäuses 2 begrenzten Aufnahmeraums 3. Die Kabelrinne 18 erstreckt sich in Hochrichtung 30 des Gehäuses 2 von der ersten Stirnseite 26 bis zur zweiten Stirnseite 27 des Gehäuses 2. Die Enden der Kabelrinne 18 sind - wie Fig. 6 zeigt - zum ersten Stirnbauteil 28 und/oder zum zweiten Stirnbauteil 29 offen. In der Kabelrinne 18 geführte elektrische Leitungen 21 können so einerseits mit den Akkukontakte 34 und andererseits mit der Überwachungseinrichtung 40 verbunden werden. Bevorzugt ist in jeder ersten Seitenwand 5, die insbesondere die Breitseiten des Gehäuses 2 des Akkupacks 1 bilden, eine Vertiefung 14 als Kabelrinne 18 ausgebildet.

Wie Fig. 5 zeigt, ist die Kabelrinne 18 zum Aufnahmeraum 3 hin geschlossen ausgebildet. In einer ersten Ausführungsform kann die Kabelrinne 18 nach Einlegen elektrischer Leitungen mit einem Füllmaterial 15 verschlossen werden. Ein Füllspiegel 16 des Füllmaterials 15 liegt insbesondere in einer Ebene mit der Innenfläche 7 der ersten Seitenwand 5. Es kann auch zweckmäßig sein, die Kabelrinne 18 mit einem Kanaldeckel 37 zu verschließen. Der Kanaldeckel 37 verschließt die Vertiefung 14 derart, dass er in einer Ebene mit der Innenfläche 7 der ersten Seitenwand 5 liegt.

Die Vertiefung 14 der Kabelrinne 18 hat eine senkrecht zur Seitenwand 5 gemessene tiefe T, die gleich oder geringer ist die eine senkrecht zur Seitenwand gemessene Rippenhöhe H ein Längsrippe 20. Der Boden der Vertiefung 14 tritt somit nicht über die äußere Kontur des Gehäuses 2 nach außen vor.

## Patentansprüche

1. Akkupack als Energiequelle für einen elektrischen Verbraucher,
wobei der Akkupack (1) ein geschlossenes Gehäuse (2) mit einem inneren Aufnahmeraum (3) für mehrere Einzelzellen (4) aufweist,
und das Gehäuse (2) des Akkupacks (1) eine allgemeine Grundform mit ersten und zweiten Seitenwänden (5, 6) umfasst,
wobei zumindest die Seitenwände (5, 6) des Gehäuses (2) aus einem wärmeleitenden Material bestehen, und die Innenflächen (7, 8) der Seitenwände (5, 6) den Aufnahmeraum (3) begrenzen,
und auf den dem Aufnahmeraum (3) abgewandten Außenflächen (9) der Seitenwände (5, 6) Kühlrippen (20) ausgebildet sind,
**dadurch gekennzeichnet,**
**dass** in dem Aufnahmeraum (3) ein aus mehreren Einzelzellen (4) bestehender Zellverbund (19) aufgenommen ist,
wobei eine Einzelzelle (4) Flachseiten (10) und Randseiten (11) aufweist, und der Zellverbund (19) aus mehreren mit ihren Flachseiten (10) geschichtet nebeneinander liegenden Einzelzellen (4) besteht, derart, dass der Zellverbund (19) außen liegende, äußere Einzelzellen (4a) und innen liegende, innere Einzelzellen (4b) aufweist,
**dass** die äußeren Einzelzellen (4a) des Zellverbundes (19) mit ihren Flachseiten (10) flächig und wärmeübertragend an den Innenflächen (7) der ersten Seitenwände (5) des Gehäuses (2) anliegen,
und **dass** die inneren Einzelzellen (4b) wärmeübertragend an die äußeren Einzelzellen (4a) des Zellverbundes (19) angebunden sind.

2. Akkupack nach Anspruch 1,
**dadurch gekennzeichnet, dass** die Einzelzellen (4) des Zellverbunds (19) mit ihren Randseiten (11) wärmeübertragend an den Innenflächen (8) der zweiten Seitenwände (6) des Gehäuses (2) anliegen.

3. Akkupack nach Anspruch 1 oder 2,
**dadurch gekennzeichnet, dass** zwischen benachbarten Einzelzellen (4) des Zellverbundes (19) ein insbesondere aus ein wärmeleitendes Material umfassendes Volumenausgleichselement (12) angeordnet ist.

4. Akkupack nach einem der Ansprüche 1 bis 3,
**dadurch gekennzeichnet, dass** mehrere Einzelzellen (4) des Zellverbundes (19) flächig, insbesondere unmittelbar flächig aneinander anliegen.

5. Akkupack nach einem der Ansprüche 1 bis 4,
**dadurch gekennzeichnet, dass** der Zellverbund (19) den Aufnahmeraum (3) bis zu 95% ausfüllt, insbesondere vollständig ausfüllt, und wärmeübertragend an den ersten und den zweiten Seitenwänden (5, 6) anliegt.

6. Akkupack nach einem der Ansprüche 1 bis 5,
**dadurch gekennzeichnet, dass** die zweiten Seitenwände (6) über zumindest eine innere, wärmeleitende Trennwand (13) miteinander verbunden sind, wobei der Aufnahmeraum (3) durch die Trennwand (13) in zumindest zwei Teilräume aufgeteilt ist, in denen jeweils ein Zellverbund (9) aufgenommen ist.

7. Akkupack nach einem der Ansprüche 1 bis 6,
**dadurch gekennzeichnet, dass** auf der Innenfläche (7, 8) einer Seitenwand (5, 6) eine als Vertiefung (14) in der Seitenwand (5, 6) ausgebildete Kabelrinne (18) vorgesehen ist, die außerhalb des von den Innenflächen (7, 8) der Seitenwände (5, 6) des Gehäuses (2) begrenzten Aufnahmeraums (3) liegt.

8. Akkupack nach Anspruch 7,
**dadurch gekennzeichnet, dass** das Gehäuse (2) eine erste Stirnseite (26) und eine zweite Stirnseite (27) aufweist, und sich die Kabelrinne (18) insbesondere in Hochrichtung (30) des Gehäuses (2) von der ersten Stirnseite (26) bis zur zweiten Stirnseite (27) erstreckt.

9. Akkupack nach einem der Ansprüche 7 oder 8,
**dadurch gekennzeichnet, dass** die Kabelrinne (18) zum Aufnahmeraum (3) hin geschlossen ist.

10. Akkupack nach einem der Ansprüche 7 bis 9,
**dadurch gekennzeichnet, dass** die Kabelrinne (18) mit einem Füllmaterial (15) verfüllt ist, und ein parallel zur Seitenwand (5) liegender Füllspiegel (16) des Füllmaterials (15) in einer Ebene mit der Innenfläche (7) der Seitenwand (5) liegt, oder die Kabelrinne (18) mit einem Kanaldeckel (37) verschlossen ist und einen zum Aufnahmeraum (3) geschlossenen Kabelkanal bildet, wobei der Kanaldeckel (37) in einer Ebene mit der Innenfläche (7) der Seitenwand (5) liegt.

11. Akkupack nach einem der Ansprüche 7 bis 10,
**dadurch gekennzeichnet, dass** auf der Außenfläche (17) einer Seitenwand (5) des Gehäuses (2) in Hochrichtung (30) des Gehäuses (2) verlaufende Längsrippen (20) vorgesehen sind, und die Kabelrinne (18) eine senkrecht zur Seitenwand (5) gemessene Tiefe (T) aufweist, die gleich oder geringer ist wie eine senkrecht zur Seitenwand (5) gemessene Rippenhöhe (H) einer Längsrippe.

12. Akkupack nach einem der Ansprüche 7 bis 11,
**dadurch gekennzeichnet, dass** die erste Stirnseite (26) des Gehäuses (2) als Anschlussseite des Akkupacks (1) ausgebildet ist, in der elektrische Akkukontakte (23) zum Laden oder Entladen des Zellverbundes (19) vorgesehen sind, und im Bereich der zweiten Stirnseite (27) des Gehäuses (2) eine elektronische Überwachungseinrichtung (40) für den Zellverbund (19) angeordnet ist, wobei von den Akkukontakten (23) zur Überwachungseinrichtung (40) führende elektrischen Leitungen (21) in der Kabelrinne (18) geführt sind.

13. Akkupack nach einem der Ansprüche 1 bis 12,
**dadurch gekennzeichnet, dass** das Gehäuse (2) des Akkupacks (1) aus Gehäusebauteilen (50) für die Seitenwände (5, 6) und jeweils einem Stirnbauteil (28, 29) für je eine Stirnseite (26, 27) zusammengesetzt ist, wobei ein Stirnbauteil (28, 29) insbesondere die Ränder (24, 25) der Seitenwände (5, 6) übergreift und/oder die Ränder (24, 25) der Seitenwände (5, 6) insbesondere in eine umlaufende Dichtungsnut (32, 33) eines Stirnbauteils (28, 29) eingreifen..

14. Akkupack nach Anspruch 13,
**dadurch gekennzeichnet, dass** auf der Außenfläche (17) einer Seitenwand (5) des Gehäuses (2) in Hochrichtung (30) verlaufende Längsrippen (20) vorgesehen sind, und zumindest eine auf einer Seitenwand (5) zwischen zwei Längsrippen (20) ausgebildete Längsrinne (22) in ein Stirnbauteil (28, 29) einer Stirnseite (26, 27) mündet.

15. Akkupack nach Anspruch 14,
**dadurch gekennzeichnet, dass** die Mündung (36) einer ersten Längsrinne (22) eine Angussöffnung für ein Vergussmaterial (42) bildet, und die Mündung (39) einer zweiten Längsrinne (22) eine Entlüftungsöffnung bildet.
